Europäisches Patentamt

European Patent Office

Office européen des brevets

(11) Publication number: **0 425 040 A2**

(12) **EUROPEAN PATENT APPLICATION**

(21) Application number: **90202812.5**

(22) Date of filing: **22.10.90**

(51) Int. Cl.⁵: **F04D 29/26, F16B 21/18, F16D 1/08**

(30) Priority: **25.10.89 IT 2199389 U**

(43) Date of publication of application:
**02.05.91 Bulletin 91/18**

(84) Designated Contracting States:
**DE ES FR GB SE**

(71) Applicant: **WHIRLPOOL INTERNATIONAL B.V.**
**Tarwelaan 58**
**NL-5632 KG Eindhoven(NL)**

㊽ **DE FR GB SE**

Applicant: **IRE INDUSTRIE RIUNITE**
**EURODOMESTICI S.R.L.**

**27, Viale Guido Borghi**
**I-21025 Comerio (Varese)(IT)**

㊽ **ES**

(72) Inventor: **Moroni, Giampiero**
**c/o INT. OCTROOIBUREAU B.V., Prof.**
**Holstlaan 6**
**NL-5656 AA Eindhoven(NL)**

(74) Representative: **Bos, Kornelis Sjoerd et al**
**INTERNATIONAAL OCTROOIBUREAU B.V.**
**Prof. Holstlaan 6**
**NL-5656 AA Eindhoven(NL)**

(54) **Device for coupling a fan to its drive shaft, particularly in fan-assisted domestic electric ovens.**

㊗ A device for coupling a fan to its drive shaft, particularly in fan-assisted domestic electric ovens, characterised by providing on the drive shaft (2) two opposing recesses (6, 7), said recesses (6, 7) being arranged to cooperate with corresponding recesses (10) provided in a bush (3) associated with the fan (1), to define a seat for an elastic element (12) which effects the axial and torsional locking of the parts (1, 2).

Fig. 1

# DEVICE FOR COUPLING A FAN TO ITS DRIVE SHAFT, PARTICULARLY IN FAN-ASSISTED DOMESTIC ELECTRIC OVENS.

This invention relates to a device for coupling a fan to its drive shaft, particularly in fan-assisted domestic electric ovens. With particular reference to fan-assisted domestic electric ovens, in these the usual fan is mounted manually on its drive shaft and is torsionally and axially locked to it generally by normal pins. This method of fitting has various drawbacks.

In this respect, it often happens that the operator or person doing the fitting does not adequately position the pin in the respective seats provided in the fsn and drive shaft. This results in bad alignment of the parts and therefore a relative movement between them which can also result in the fan separating from its drive shaft.

Moreover, because the parts are fitted together when the oven structure has already been assembled, the operator is compelled to carry out the fitting operation in limited space, thus making the operation difficult.

An object of the present utility is to provide a coupling device of the stated type which permits simple and reliable mounting of the fan on the drive shaft, and also allows the operation to be carried out mechanically without any human intervention.

According to the present invention there is provided a coupling device of the type defined in the opening paragraph characterised by providing on the drive shaft two opposing recesses, said recesses being arranged to cooperate with corresponding recesses provided in a bush associated with the fan, to define a seat for an elastic element which effects the axisl and torsional locking of the parts.

The present invention will be more apparent from the accompanying drawing, in which:

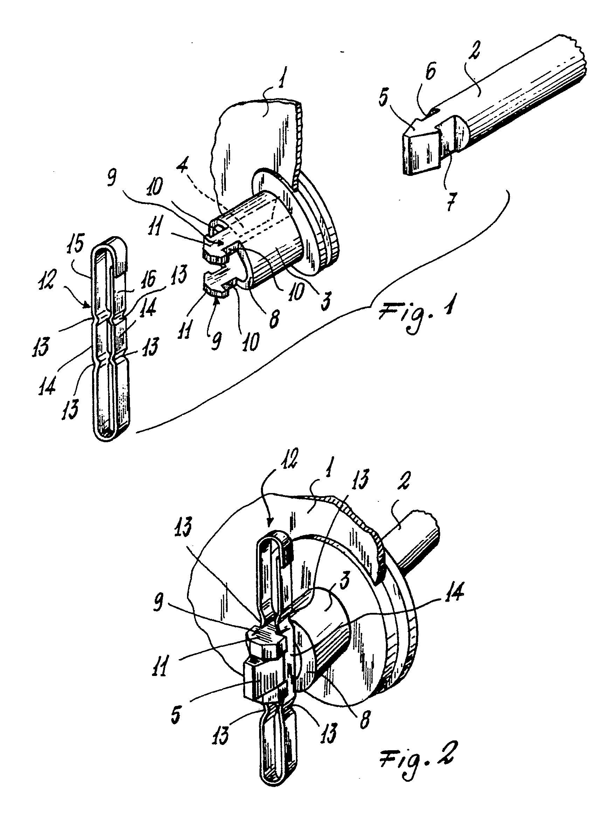

Figure 1 is an exploded partial view of the elements defining the device of the utility model; and

Figure 2 is a front perspective partial view of a fan coupled to the corresponding drive shaft.

Said figures show part of a fan 1 to be mounted on a drive shaft 2 driven in known manner inside a fan-assisted domestic electric oven.

Specifically, the fan 1 is fixed to a bush or hub 3 provided with a through bore 4 into which the drive shaft 2 penetrates. This latter has a tapered end 5 in proximity to which two opposing recesses 6 and 7 are provided.

At least one section of the bore 4 of the hub 3 has a shape corresponding to the shape of the tapered end 5 of the shaft 2. This means that the fan can be mounted on the shaft 2 only when the hub or bush 3 associated with the fan is aligned with the end 5 of the shaft.

The bush 4 has an end 8 at which the bore 4 emerges. On this end there are provided in superposed positions two orthogonally projecting arms 9 comprising a recess 10 on each side in corresponding positions.

The recesses 10 are therefore in corresponding positions. Finally, each arm 9 comprises a free tapered end 11.

Said figures also show an elastic means 12 in the form of a spring of elongated interrupted ring shape. The element or spring 12 comprises inward projections 13 which define a substantially central region on each of the corresponding sides 15 and 16 of the spring.

The fan is fitted on the shaft by firstly mounting the spring 12 on the bush 3. This is done by making the central regions 14 of the spring coincide with the recesses 10 in the arms 9 rigid with said bush.

The spring is retained on the bush because of the presence of the inward projections 13.

Having done this the fan 1 (rigid with the bush 3) is mounted on the drive shaft 2. As stated, because of the particular construction of the hub 3, this mounting can only take place if the shaft 2 and bush (and fan 1) are in particular relative positions.

During this operation of fitting the fan to the drive shaft, the end 5 of this latter firstly emerges from the bore 4 in the bush 3 and then cooperates with the spring 12. Specifically, the spring firstly widens under the action of said end 5 (but not without separating from the bush 3) and then clamps onto the shaft 2 when the recesses 6 and 7 correspond in position with the recesses 10 in the arms 9 of the bush 3. This therefore secures the fan on the drive shaft by both axial and torsional locking due to the regions 14 corresponding with the seats defined by the superposed recesses 6, 7 and 10.

A coupling device constructed in accordance with the utility model enables the fan to be secured to the corresponding drive shaft in a simple and reliable manner.

Furthermore, said device not only enables the fitting to be done manually, but also automatically using robotized arms (of known type).

A device has been described for coupling a fan to a drive shaft in a fan-assisted oven. However such a device can be used in any household electrical appliance provided with a forced air system (such as a refrigerator) or in any machine or appliance in which a fan has to be coupled to a corresponding drive shaft.

## Claims

1. A device for coupling a fan to its drive shaft, particularly in fan-assisted domestic electric ovens, characterised by providing on the drive shaft (2) two opposing recesses (6, 7), said recesses (6, 7) being arranged to cooperate with corresponding recesses (10) provided in a bush (3) associated with the fan (1), to define a seat for an elastic element (12) which effects the axial and torsional locking of the parts (1, 2).

2. A device as claimed in Claim 1, characterised in that the drive shaft (2) has a tapered end (5), in proximity to which the opposing recesses (6, 7) are provided, said end (5) being arranged to cooperate with a bore (4) provided in the bush (3).

3. A device as claimed in Claim 1, characterised in that the elastic element is a spring (12) in the form of an elongated interrupted or interrupted ring, having opposing sides (15, 16) of which an intermediate part (14) is arranged to be positioned in the seat defined when the drive shaft (2) is fitted into the bush (3) associated with the fan (1).

4. A device as claimed in Claim 1, characterised in that the recesses (10) in the bush (3) are provided in superposed arms (19) extending orthogonally from said bush, said arms (9) having tapered free ends (11).

Fig. 1

Fig. 2